# EUROPÄISCHE PATENTSCHRIFT

(11) **EP 4 355 697 B1**
(45) Veröffentlichungstag und Bekanntmachung des Hinweises auf die Patenterteilung: **07.05.2025**
(21) Anmeldenummer: 22712920.2
(22) Anmeldetag: 09.03.2022
(51) Int. Cl.: C02F 11/14, C02F 1/52, C02F 1/00

(54) **VERFAHREN ZUR REGELUNG DER ZUGABE EINES FLOCKUNGSMITTELS ZU EINEM SCHLAMM**
METHOD FOR REGULATING THE ADDITION OF A FLOCCULANT TO A SLUDGE
PROCÉDÉ DE RÉGULATION D'AJOUT DE FLOCULANT À DES BOUES

(30) Priorität: 18.06.2021 AT 504922021
(43) Veröffentlichungstag der Anmeldung: 24.04.2024
(73) Patentinhaber: Andritz AG, 8045 Graz (AT)
(72) Erfinder: TANZER, Alexander, 8020 Graz (AT); SPIELMANN, Christoph, 8151 Hitzendorf (AT)
(74) Vertreter: Anzel, Andreas
(86) Internationale Anmeldenummer: PCT/EP2022/055973
(87) Internationale Veröffentlichungsnummer: WO 2022/263020

(56) Entgegenhaltungen:
- KR-A- 20130 033 148
- US-A- 5 380 440

## Beschreibung

Die Erfindung betrifft ein Verfahren zur Regelung der Zugabe eines Flockungsmittels zu einem Schlamm, wobei dem Schlamm das Flockungsmittel zugegeben wird und der Schlamm anschließend in einer Entwässerungsvorrichtung, beispielsweise einer Entwässerungsschnecke, einem Dekanter, einer Siebentwässerung, etc., zumindest teilweise entwässert wird, wobei von dem entwässerten Schlamm und/oder von der aus dem Schlamm entwässerten Flüssigkeit Bilder mit einem Kamerasystem erstellt werden. Die Erfindung betrifft auch eine Entwässerungsvorrichtung für Schlamm mit einem Kamerasystem sowie ein Computerprogrammprodukt.

Schlamm bezeichnet in einer Flüssigkeit verteilten Feststoff, wobei der Feststoff typischerweise fein verteilt und sehr feinkörnig ist und die Menge an Flüssigkeit zur Menge an Feststoff vergleichsweise gering ist. Technische Prozesse zielen oft darauf ab, den Schlamm weiter zu entwässern und somit den Feststoffgehalt zu erhöhen. Üblicherweise wird dazu dem Schlamm ein Flockungsmittel, typischerweise ein Polymer, zugegeben und danach erfolgt die weitere Entwässerung. Das Flockungsmittel bewirkt eine Flockung, d.h. der feinkörnige Feststoff wird zu größeren Flocken aggregiert, wobei die Abtrennung der Flüssigkeit von den Flocken vorteilhaft möglich ist. Die für eine optimale Flockung benötigte Menge an Flockungsmittel hängt von vielen Parametern des Schlamms ab - so zum Beispiel von der Partikelgrößenverteilung des Feststoffs und insbesondere von der Natur des Feststoffs (d.h. ob von mineralischer, fasriger oder biologischer Natur). Wird weniger als die optimale Menge an Flockungsmittel zugesetzt, so wird nur eine geringere Flockung erzielt, d.h. es verbleibt feinkörniger, nicht-geflockter Feststoff in der Flüssigkeit, was zu einer geringeren als optimal möglichen Entwässerung führt. Im umgekehrten Fall einer die optimale Menge überschreitenden Zugabe an Flockungsmittel wird hingegen keine höhere als optimal mögliche Entwässerung erzielt. Eventuell resultiert daraus sogar eine Verschlechterung der Entwässerung. Erschwerend kommt hinzu, dass die erzielbare Entwässerung und somit der Trockengehalt des Schlamms, keine feste, gegebene Zielgröße ist, sondern selbst stark von den Parametern des Schlamms abhängig ist. Eine Regelung nach dem Trockengehalt des Schlamms ist insofern schwierig. Im Stand der Technik erfolgt die Dosierung von Flockungsmitteln oft durch das Betriebspersonal nach Gefühl und somit subjektiv, wobei im Sinne einer sicheren Betriebsführung eine Tendenz zur Überdosierung gegeben ist. Generell ist die Verwendung von Flockungsmitteln kostenintensiv. Ein effizienter Einsatz ist daher wünschenswert, wobei auch aus ökologischen Gründen eine Überdosierung von Flockungsmitteln zu vermeiden ist.

So offenbart die EP3134354 B1 beispielsweise ein Verfahren zur Entwässerung von Schlamm auf einem Sieb. Entsprechend dem Verfahren ist der Schlamm notwendigerweise auf einem Sieb geführt, der durch Waschdüsen vor einem Einlaufbereich zu reinigen ist, wobei das Fließverhalten des Schlamms und die freie Sieboberfläche in einem Kontrollbereich optisch zu erfassen sind. Dieses Verfahren erfordert somit das Vorhandensein eines Siebes, einer Siebkonditionierung sowie die Erfassung der freien Sieboberfläche und somit die Erfassung von Größen losgelöst vom eigentlichen Schlamm.

Die KR20130033148A offenbart ein Verfahren und ein System zur Entwässerung mit Regelung der Flockungsmittelzugabe, wobei von einem in einem Sedimentationstank agglomerierten Schlamm Bilder mit einer Fotografieeinrichtung erfasst werden. Zur Analyse der Schlammeigenschaften und zur Bestimmung der Dosierung des Flockungsmittels werden die Bilder mit zuvor gespeicherten Referenzbildern verglichen.

Die US5380440A beschreibt eine Vorrichtung und ein Verfahren zur Entwässerung eines Schlamms, wobei nach einer Filtration Bilder von dem entwässerten Schlamm mit einer Videokamera aufgezeichnet werden. Die Bilder werden mit Bildern, welche repräsentativ für eine bevorzugte Entwässerung sind, verglichen um den Feuchtegrad des entwässerten Schlamms zu beurteilen.

Ziel der Erfindung ist ein Verfahren zur Regelung der Zugabe eines Flockungsmittels zu einem Schlamm, wobei die Regelung nach objektiven Kriterien durch eine Beurteilung des Schlamms erfolgt und größtmögliche ökologische und ökonomische Effizienz erlaubt.

Dies gelingt erfindungsgemäß dadurch, dass die Bilder von dem entwässerten Schlamm und/oder von der aus dem Schlamm entwässerten Flüssigkeit mit einem computerimplementierten Rechenmodell zur Bildanalyse ausgewertet werden, das Rechenmodell zuvor mit einem Trainingsdatensatz trainiert wurde, der Trainingsdatensatz einerseits Trainingsbilder von entwässertem Schlamm und/oder von der aus dem Schlamm entwässerten Flüssigkeit sowie die aus den einzelnen Trainingsbildern durch Unterteilung gebildeten Trainingsteilbilder und die Klassifizierung der einzelnen Trainingsteilbildern umfasst, wobei das Rechenmodell die einzelnen Bilder in Teilbilder unterteilt, die Teilbilder des einzelnen Bildes klassifiziert und auf Basis der Klassifizierung die Entwässerung des Schlamms beurteilt, wobei auf Basis der Beurteilung der Entwässerung des Schlamms die Regelung der Zugabe des Flockungsmittels erfolgt. Erfindungsgemäß werden Bilder von dem entwässerten Schlamm und/oder von der aus dem Schlamm entwässerten Flüssigkeit mit dem Kamerasystem erstellt und die Bilder werden mit einem computerimplementierten Rechenmodell zur Bildanalyse, ausgebildet als künstliches neuronales Netzwerk, das auf einem gewöhnlichen Industrie-PC ausgeführt wird, ausgewertet. Dabei ist wesentlich, dass zur Auswertung die einzelnen Bilder zunächst in Teilbilder unterteilt werden, wobei durch das Rechenmodell eine Klassifizierung der einzelnen Teilbilder erfolgt. Somit wird auf Basis der Klassifizierung der einzelnen Teilbilder eines Bildes die Entwässerung des Schlamms beurteilt. Insbesondere wird nicht das Bild als solches klassifiziert, z.B. durch einen Vergleich des Bildes mit Trainingsbildern. Hinsichtlich der Unterteilung der Bilder in Teilbilder ist auszuführen, dass die Teilbilder eine möglichst kleine Größe aufweisen sollen, wobei die Größe der Teilbilder zumindest so groß zu wählen ist, dass die Teilbilder noch Rückschlüsse auf die Oberflächentextur, insbesondere die Körnung, das Relief oder die Risse, des entwässerten Schlamms bzw. auf die Blasen oder Schaumbildung der entwässerten Flüssigkeit zulassen. Eine Auswertung auf Basis eines einzelnen Bildpunktes des Teilbildes ist daher nicht möglich, da so keinerlei Rückschluss auf beispielsweise die Textur möglich ist. Es ist besonders vorteilhaft, wenn eine optimale Unterteilung auf Basis der Trainingsbilder identifiziert wird. Dazu werden zunächst Trainingsbilder mit markanter Oberflächentextur, Körnung, Relief und Rissen bzw. Blasen und Schaumbildung identifiziert. Danach wird die Unterteilung dieser Trainingsbilder zunehmend vergrößert und so die Größe der Teilbilder verringert, wobei die zunehmende Unterteilung solange verfolgt wird, solange die Teilbilder noch die markante Textur, Körnung, Riss etc. bzw. Teile davon erkennen lassen. Diese Identifizierung der optimalen Unterteilung erfolgt beispielsweise durch einen Trainer des Rechenmodells und ist besonders effizient. Eine Identifizierung der optimalen Unterteilung im Rahmen des Trainings durch das Rechenmodell selbst ist ebenso denkbar, wobei dies hingegen einen großen Rechen- bzw. Ressourcenaufwand bedeutet. Unerwarteterweise erlaubt die Auswertung und Klassifizierung der Teilbilder eine bessere Aussagekraft bei einem weit geringeren Berechnungsaufwand und geringeren Anforderungen an die verwendete Computerausstattung als dies bei einem Vergleich auf Basis der einzelnen Bilder möglich wäre. Weiter Vorteile ergeben sich bei der Generierung des Trainingsdatensatzes. So genügen schon wenige Trainingsbilder, da durch die Unterteilung ein Vielfaches an Trainingsteilbildern aus den Trainingsbildern erhalten wird. Insbesondere kann die Klassifizierung der Trainingsteilbilder effizient erfolgen, da das Trainingsbild als solches einer Klasse zugeordnet wird, wobei die durch Unterteilung erhaltenen Trainingsteilbilder die Klasse des Trainingsbildes im Wesentlichen erben. Die Unterteilung der Bilder in Teilbilder erfolgt analog der Unterteilung der Trainingsbilder in Trainingsteilbilder. Ebenso vorteilhaft erfolgt die Erstellung der Bilder analog der Erstellung der Trainingsbilder, z.B. hinsichtlich der Anordnung bzw. der gewählten Perspektive des Kamerasystems zu dem entwässerten Schlamm bzw. zu der aus dem Schlamm entwässerten Flüssigkeit.

In der erfindungsgemäßen Ausgestaltung des Verfahrens klassifiziert das Rechenmodell die Teilbilder von dem entwässerten Schlamm nach einer Oberflächentextur, insbesondere einer Körnung, einem Relief bzw. Rissen des entwässerten Schlamms. Erfindungsgemäß wird das Rechenmodell zuvor mit einem Trainingsdatensatz trainiert, wobei die Trainingsbilder in Trainingsteilbilder unterteilt werden und das Rechenmodell mit den klassifizierten Trainingsteilbildern trainiert wird. Die Unterteilung der Trainingsbilder in Trainingsteilbilder erfolgt derart, dass die Trainingsteilbilder eine möglichst kleine Größe aufweisen, wobei die Größe der Trainingsteilbilder zumindest so groß gewählt ist, dass die Teilbilder die Oberflächentextur, insbesondere die Körnung, das Relief bzw. Risse des entwässerten Schlamms wiedergeben. Nach abgeschlossenem Training des Rechenmodells werden die Bilder von dem entwässerten Schlamm mit dem computerimplementierten Rechenmodell zur Bildanalyse ausgewertet, wobei das Rechenmodell die einzelnen Bilder in Teilbilder unterteilt, klassifiziert und so die Entwässerung des Schlamms beurteilt. Wenn zusätzlich oder alternativ Bilder von der aus dem Schlamm entwässerten Flüssigkeit erstellt werden, so wertet das Rechenmodell die aus den Bildern erstellten Teilbilder nach in der Flüssigkeit eingeschlossene Blasen bzw. einem auf der Flüssigkeit ausgebildeten Schaum aus und klassifiziert die Teilbilder entsprechend. Wieder müssen die durch Unterteilung gebildeten Teilbilder eine ausreichende Größe aufweisen. Vorteilhafterweise erfolgt unterstützend die Auswertung der Teilbilder nach Farbeigenschaften, insbesondere einem Farbwert, einer Farbsättigung bzw. einem Hellwert.

In einer weiteren vorteilhaften Ausgestaltung des Verfahrens klassifiziert das computerimplementierte Rechenmodell reduzierte Teilbilder, wobei das Rechenmodell mit reduzierten Trainingsteilbildern trainiert wurde. Dabei ist unter Reduzierung eines Teilbildes die Mittelung bzw. Zusammenfassung von Bildpunktinformation einer Anzahl von Bildpunkten zu verstehen. Die reduzierten Teilbilder stellen somit eine Mosaikform der Teilbilder dar. Unerwarteterweise wurde festgestellt, dass trotz der Reduzierung die Teilbilder weiterhin Rückschlüsse auf die Oberflächentextur, insbesondere die Körnung, das Relief oder die Risse, des entwässerten Schlamms bzw. auf die Blasen oder Schaumbildung der entwässerten Flüssigkeit zulassen und so eine erfolgreiche Klassifizierung, bei einem weiter reduzierten Berechnungs- bzw. Ressourcenaufwand, erlauben.

Eine vorteilhafte Ausgestaltung des Verfahrens besteht darin, dass die Klassifizierung der Teilbilder zumindest zwei Klassen umfasst, wobei eine erste Klasse eine zu geringe Entwässerung bzw. Flockungsmittelzugabe und eine zweite Klasse eine zu große Entwässerung bzw. Flockungsmittelzugabe darstellt. Auf der Basis der klassifizierten Teilbilder wird die Entwässerung des Schlamms beurteilt. Diese Klassifizierung in zwei Klassen - d.h. in eine zu geringe bzw. zu große Entwässerung bzw. Flockungsmittelzugabe - entspricht dem Konzept einer Zweipunktregelung. So kann ein Zustand der optimalen Entwässerung bzw. Flockungsmittelzugabe erreicht werden, entsprechend dem Regelkonzept kommt die Regelung allerdings nie zur Ruhe. Alternativ erfolgt die Klassifizierung der Teilbilder in zumindest drei Klassen. So repräsentiert jeweils eine Klasse eine zufriedenstellende, eine zu geringe bzw. eine zu große Entwässerung bzw. Flockungsmittelzugabe. Dies entspricht dem Konzept einer Dreipunktregelung, wobei im Bereich der optimalen Entwässerung bzw. Flockungsmittelzugabe keine Änderung der Zugabemenge des Flockungsmittels zu dem Schlamm erfolgt, bei zu geringer bzw. zu großer Entwässerung bzw. Flockungsmittelzugabe hingegen die Zugabemenge des Flockungsmittels zu dem Schlamm vergrößert bzw. verringert wird. Die Regelung erfolgt entsprechend gleichmäßiger. Vorteilhafterweise wird in den beschriebenen Ausgestaltungen zur Beurteilung der Entwässerung des Schlamms die Verteilung der Häufigkeit der Klassen der Teilbilder des Bildes herangezogen wird. So kann beispielsweise die Regelung der Zugabe des Flockungsmittels entsprechend der häufigsten Klasse erfolgen. Vorteilhafterweise wird beispielsweise der Quotient der Häufigkeiten von zwei Klassen gebildet, z.B. der Klassen für zu geringe bzw. zu große Entwässerung, wobei dann die Beurteilung der Entwässerung entsprechend dem so gebildeten Quotienten erfolgt. Mit Vorgabe eines "optimalen Quotienten" für die optimale Entwässerung bzw. Flockungsmittelzugabe als Sollwert, sucht folglich die Regelung diesen "optimalen Quotienten" einzustellen. Der "optimale Quotient" ist beispielsweise aus dem Training des Rechenmodells mit Trainingsbildern bzw. Trainingsteilbildern bekannt, welche eine optimale Entwässerung darstellend klassifiziert sind. Vorteilhafterweise wird eine weitere Klasse zur Erfassung von Teilbildern eingeführt, wobei dieser Klasse ungültige Teilbilder zugeordnet werden. Dabei werden Teilbilder als ungültig betrachtet, so auf den Teilbildern kein entwässerter Schlamm und/oder keine aus dem Schlamm entwässerte Flüssigkeit dargestellt ist. Teilbilder können beispielsweise vornehmlich Elemente der Entwässerungsvorrichtung darstellen, beispielsweise die Schnecke einer Entwässerungs- oder Transportschnecke oder das Sieb einer Siebentwässerung. Diese Teilbilder erlauben so keine Aussage zur Entwässerung bzw. zur Zugabe des Flockungsmittels, werden als ungültig von der weiteren Auswertung ausgeschlossen und fließen nicht in die Beurteilung der Entwässerung ein.

In einer vorteilhaften Ausgestaltung des Verfahrens umfasst die Erstellung des Trainingsdatensatz die Einstellung einer gewünschten Entwässerung bzw. Flockungsmittelzugabe im Betrieb der Entwässerungsvorrichtung, wobei die Trainingsbilder von dem so entwässerten Schlamm und/oder der entwässerten Flüssigkeit als eine zufriedenstellende Entwässerung bzw. Flockungsmittelzugabe darstellend klassifiziert werden. Ebenso vorteilhaft wird nach Einstellung der gewünschten Entwässerung bzw. Flockungsmittelzugabe im Betrieb die Flockungsmittelzugabe verringert und eine zu geringe Entwässerung bzw. Flockungsmittelzugabe eingestellt bzw. wird die Flockungsmittelzugabe vergrößert und eine zu große Entwässerung bzw. Flockungsmittelzugabe eingestellt, wobei die entsprechenden Trainingsbilder dann als eine zu geringe bzw. zu große Entwässerung bzw. Flockungsmittelzugabe darstellend klassifiziert werden. Beispielsweise sei in einem Betriebspunkt der Entwässerungsvorrichtung die Zugabe des Flockungsmittels durch eine Ventilstellung bestimmt und bei der Ventilstellung von 45% eine zufriedenstellende Entwässerung bzw. Flockungsmittelzugabe gegeben. Durch Verringerung der die Flockungsmittelzugabe bestimmenden Ventilstellung auf 40% bzw. durch Vergrößerung der Ventilstellung auf 50% wird eine zu geringe bzw. zu große Entwässerung bzw. Flockungsmittelzugabe eingestellt. Die so erstellten Trainingsbilder bei optimaler, zu geringer bzw. zu großer Entwässerung bzw. Flockungsmittelzugabe werden nach Unterteilung in Trainingsteilbilder und entsprechender Klassifizierung zum Trainieren des Rechenmodells verwendet. Das beschriebene Verfahren zur Erstellung des Trainingsdatensatzes zeichnet sich durch seine Effizienz aus, da in kurzer Zeit Trainingsbilder zu den Klassen optimale, zu geringe bzw. zu große Entwässerung bzw. Flockungsmittelzugabe erstellt und klassifiziert werden können. Im Bedarfsfall, weil z.B. ein andersartiger Schlamm zu entwässern ist, kann sehr schnell ein neuer Trainingsdatensatz erstellt und das computerimplementierte Rechenmodell entsprechend trainiert werden.

In einer weiteren günstigen Ausgestaltung des Verfahrens werden die Bilder von dem entwässerten Schlamm und/oder von der entwässerten Flüssigkeit in einem Bereich erstellt, welcher Bereich eine Grenzfläche der Entwässerungsvorrichtung umfasst, insbesondere eine freie Siebfläche eines Siebes auf dem der Schlamm geführt ist, beispielsweise in einem Randbereich des Siebes oder im Nachlauf nach einer auf ein Sieb wirkenden Barriere, eine freie Fläche einer Entwässerungs- bzw. Förderschnecke bzw. eine Wandung, die in direktem Kontakt mit dem Schlamm bzw. der entwässerten Flüssigkeit steht. Überraschenderweise wurde festgestellt, dass in Grenzflächen umfassenden Bereichen, der optimal entwässerte Schlamm eine besonders markante Oberflächentextur, insbesondere Körnung, Relief bzw. Risse ausbildet. Eine zu geringe Zugabe von Flockungsmittel führt zu glatten spiegelnden Strukturen, wohingegen eine zu große Zugabe von Flockungsmittel zu groben, matten Texturen führt. Hinsichtlich der entwässerten Flüssigkeit sind in Grenzflächen umfassenden Bereichen markante Trübungen, Schaumbildung und Ablagerungen in Abhängigkeit von der Entwässerung bzw. der Zugabe des Flockungsmittels zu beobachten.

Die Erfindung betrifft auch eine Entwässerungsvorrichtung für Schlamm gemäß Anspruch 11.

Vorteilhafterweise umfasst das Kamerasystem eine Digitalkamera und zumindest ein Leuchtmittel, wobei der Digitalkamera eine optische Achse zugeordnet ist und die Leuchtmittel zur Ausleuchtung in Richtung der optischen Achse ausgestaltet sind. Dabei kann das Kamerasystem eine Blende umfassen, wobei die Blende zwischen der Kamera bzw. der Digitalkamera und dem entwässerten Schlamm bzw. der entwässerten Flüssigkeit angeordnet ist. Die Kamera ist dabei von den Leuchtmitteln umgeben, welche ebenfalls zwischen der Blende und dem entwässerten Schlamm bzw. der entwässerten Flüssigkeit angeordnet sind. Die Blende erlaubt, die Kamera bzw. die Leuchtmittel vor Verschmutzung oder Kondensatbildung zu schützen. Idealerweise erlaubt das zumindest eine Leuchtmittel eine homogene Ausleuchtung in Richtung der optischen Achse, wodurch der Störfaktor Umgebungslicht reduziert bzw. eliminiert wird.

Die Erfindung betrifft weiter ein Computerprogrammprodukt, umfassend Befehle, die bewirken, dass die erfindungsgemäße Vorrichtung das erfindungsgemäße Verfahren ausführt.

Die Erfindung wird nun anhand der Zeichnungen beispielhaft beschrieben.
Fig. 1 zeigt Bilder bzw. Unterbilder von entwässertem Schlamm in einer Entwässerungsvorrichtung.
Fig. 2a und 2b zeigen unterschiedlich entwässerten Schlamm in einer Entwässerungsvorrichtung.
Fig. 3a, 3b und 3c zeigen weitere Beispiele eines unterschiedlich entwässerten Schlamms in einer Entwässerungsvorrichtung.
Fig. 4 zeigt einen Bereich in einer Entwässerungsvorrichtung mit entwässertem Schlamm und ausgebildeten Grenzflächen.
Fig. 5a und 5b zeigt ein Bild bzw. Unterbilder von entwässertem Schlamm in einer weiteren Entwässerungsvorrichtung.

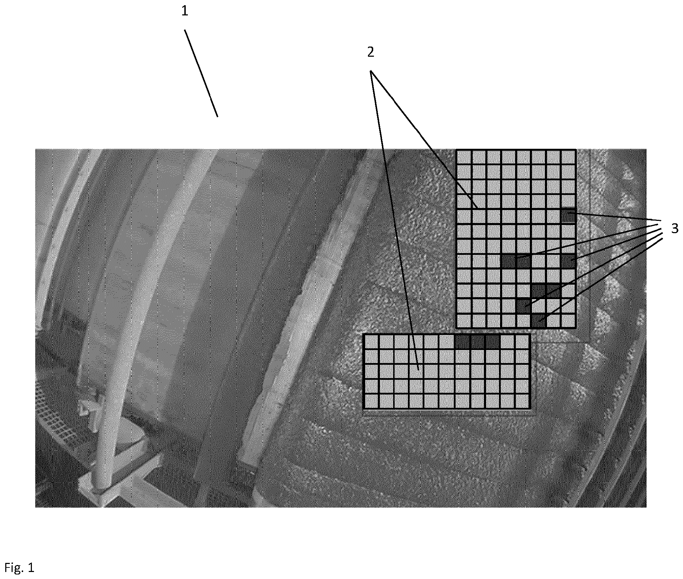

Fig. 1 zeigt Bilder 2 bzw. Unterbilder 3 von entwässertem Schlamm in einer Entwässerungsvorrichtung. Dabei wird der Schlamm unter Zugabe eines Flockungsmittels in einer als Siebentwässerung ausgebildeten Entwässerungsvorrichtung entwässert und es werden mit einem Kamerasystem Bilder 2 von dem entwässerten Schlamm erstellt. Fig. 1 verdeutlicht dabei das Verhältnis von Bild 2 zu Unterbild 3, wobei in Fig. 1 zwei Bilder 2 dargestellt sind. Das jeweilige Bild 2 wird durch das computerimplementierte Rechenmodell in Unterbilder 3 unterteilt, wobei in Fig. 1 die respektiven Unterbilder 3 als Quadrate in dem jeweiligen Bild 2 dargestellt sind. Generell sollen die Teilbilder 3 eine möglichst kleine Größe aufweisen, wobei die Größe der Teilbilder 3 zumindest so groß zu wählen ist, dass die Teilbilder 3 die Oberflächentextur, insbesondere die Körnung, das Relief bzw. Risse des entwässerten Schlamms wiedergeben. Das trainierte Rechenmodell klassifiziert in Folge die Teilbilder, was in Fig. 1 durch unterschiedlich gefärbte Teilbilder 3 bzw. Quadrate angedeutet ist. Dabei kann die Verteilung der Häufigkeit der Klassen der Teilbilder 3 zur Beurteilung der Entwässerung des Schlamms herangezogen werden.

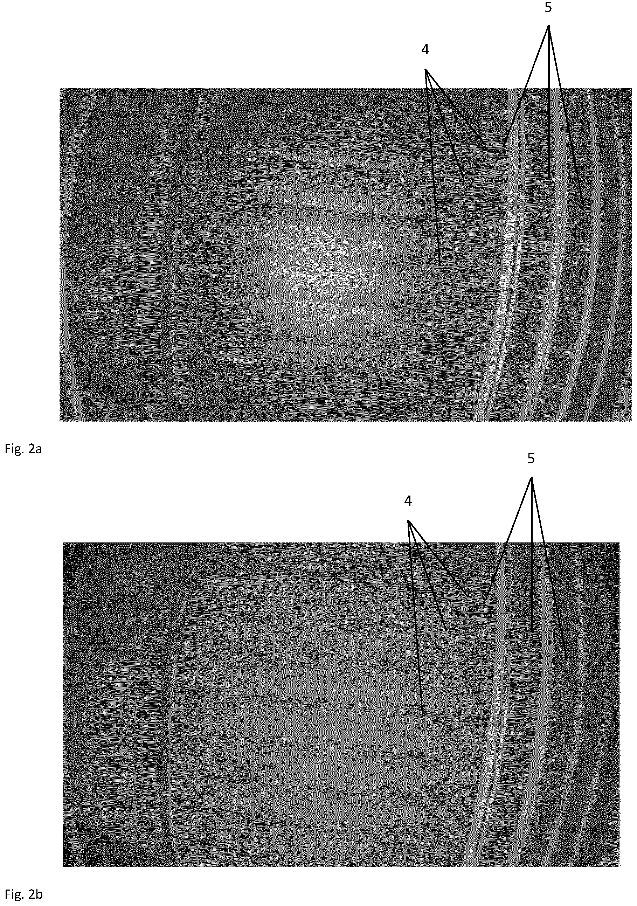

Fig. 2a und 2b zeigen unterschiedlich entwässerten Schlamm in einer Entwässerungsvorrichtung, wobei Fig. 2a eine zu geringe und Fig. 2b eine zu große Entwässerung bzw. Flockungsmittelzugabe wiedergibt. Die in Fig. 2a dargestellte zu geringe Zugabe von Flockungsmittel führt zu glatten spiegelnden Strukturen, wohingegen die in Fig. 2b dargestellte zu große Zugabe von Flockungsmittel zu groben, matten Texturen führt. Das trainierte Rechenmodell klassifiziert die Unterbilder 3 und erlaubt so die Beurteilung der Entwässerung des Schlamms. Unerwarteterweise weisen Bilder von entwässertem Schlamm, welche eine Grenzfläche 4 der Entwässerungsvorrichtung umfassen, insbesondere eine freie Siebfläche eines Siebes 6 auf dem der Schlamm geführt ist, beispielsweise in einem Randbereich des Siebes 6 oder im Nachlauf nach einer auf ein Sieb 6 wirkenden Barriere 5, die in direktem Kontakt mit dem Schlamm steht, eine besonders markante Oberflächentextur, insbesondere Körnung, Relief bzw. Risse, auf. Die Auswertung dieser Bilder ist daher vorteilhaft und in höherem Maß aussagekräftig. In Fig. 2a und 2b sind gut die Barrieren 5 zu erkennen, die auf ein Sieb 6 wirken. Im Nachlauf nach den Barrieren 5 werden die Grenzflächen 4 bzw. das Sieb 6 freigelegt, wobei der entwässerte Schlamm in der Umgebung der Grenzflächen 4 die besonders markante Oberflächentextur ausbildet.

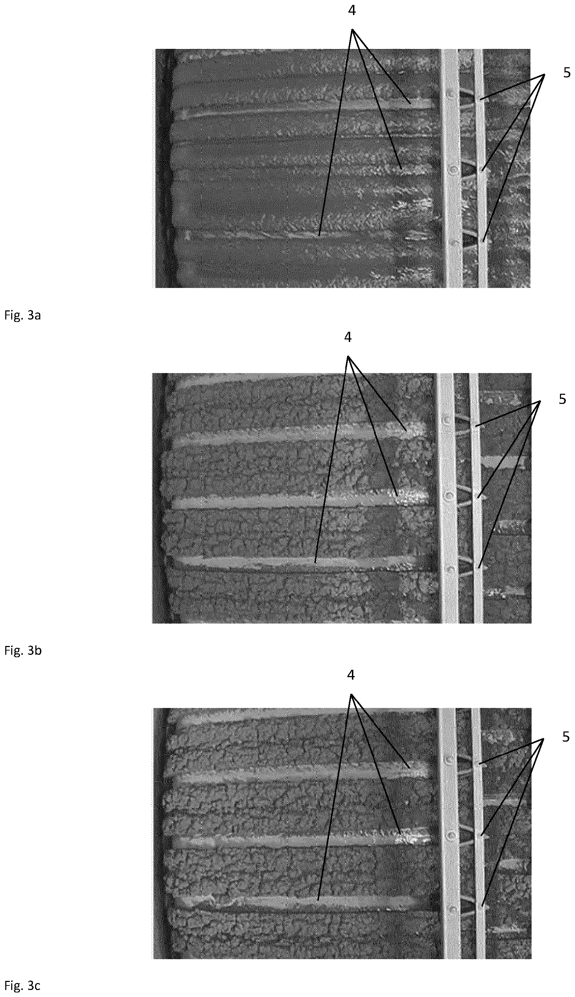

Fig. 3a, 3b und 3c zeigen weitere Beispiele eines unterschiedlich entwässerten Schlamms in einer Entwässerungsvorrichtung, wobei Fig. 3a eine zu geringe, Fig. 3b eine optimale und Fig. 3c eine zu große Entwässerung bzw. Flockungsmittelzugabe wiedergibt. Fig. 3a mit zu geringer Zugabe von Flockungsmittel führt zu glatten spiegelnden Strukturen, wobei keine markante Oberflächentextur, Körnung bzw. Relief gegeben ist. Fig. 3b mit optimaler Zugabe von Flockungsmittel führt zu der markanten Oberflächentextur, Körnung bzw. Relief, welche im Beispiel mit einer optimalen Entwässerung einhergeht. Fig. 3c mit zu großer Zugabe von Flockungsmittel führt zu noch gröberen, matten Texturen, was eine Überdosierung von Flockungsmittel erkennen lässt. Die Unterteilung der Bilder bzw. Trainingsbilder erfolgt derart, dass die Unterbilder bzw. Trainingsunterbilder eine möglichst kleine Größe aufweisen, wobei die Größe der Trainingsteilbilder zumindest so groß gewählt ist, dass die Teilbilder die Oberflächentextur, insbesondere die Körnung, das Relief bzw. Risse des entwässerten Schlamms wiedergeben. Diese Anleitung an den Fachmann ist gut mit Fig. 3a, 3b und 3c zu verstehen. Da Fig. 3a keine markante Textur darstellt, kann die Beurteilung, ob eine Unterteilung passend gewählt wurde nicht auf der Basis der Fig. 3a erfolgen. Die Fig. 3b und Fig. 3c hingegen zeigen eine sehr markante Textur, Körnung bzw. Relief. Die Größe des Unterbildes wird so klein wie möglich gewählt, wobei auf dem Unterbild notwendigerweise weiter die markante Textur, Körnung, Relief bzw. Riss erkennbar ist. Weiter ist auszuführen, dass Bilder von entwässertem Schlamm, welche eine Grenzfläche 4 der Entwässerungsvorrichtung umfassen, insbesondere eine freie Siebfläche eines Siebes 6 auf dem der Schlamm geführt ist, beispielsweise im Nachlauf nach einer auf ein Sieb 6 wirkenden Barriere 5, die in direktem Kontakt mit dem Schlamm steht, eine besonders markante Oberflächentextur, insbesondere Körnung, Relief bzw. Risse, aufweisen. In Fig. 3a, 3b und 3c sind die Barrieren 5 zu erkennen, die auf das Sieb 6 wirken, wobei die Grenzflächen 4 bzw. das Sieb 6 freigelegt werden.

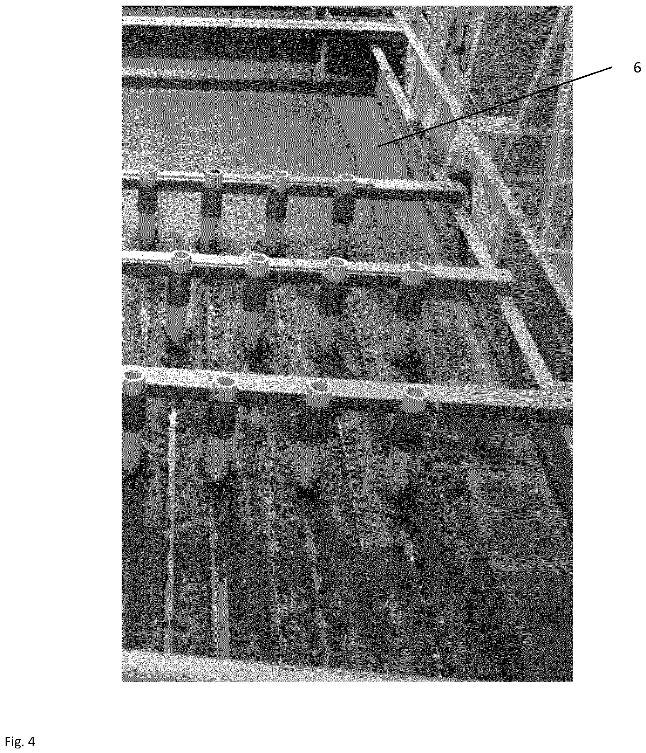

Fig. 4 zeigt einen Bereich in einer Entwässerungsvorrichtung 1 mit entwässertem Schlamm und ausgebildeten Grenzflächen. Dabei ist der entwässerte Schlamm auf einem Sieb 6 geführt, wobei Barrieren 5 auf das Sieb 6 wirken, was im Schlamm zur Ausbildung von markanten Oberflächentexturen im Nachlauf nach den Barrieren 5 führt. Bilder 2, welche eine Grenzfläche 4 umfassen, erlauben so eine besonders vorteilhafte bzw. aussagekräftige Auswertung der Teilbilder 3.

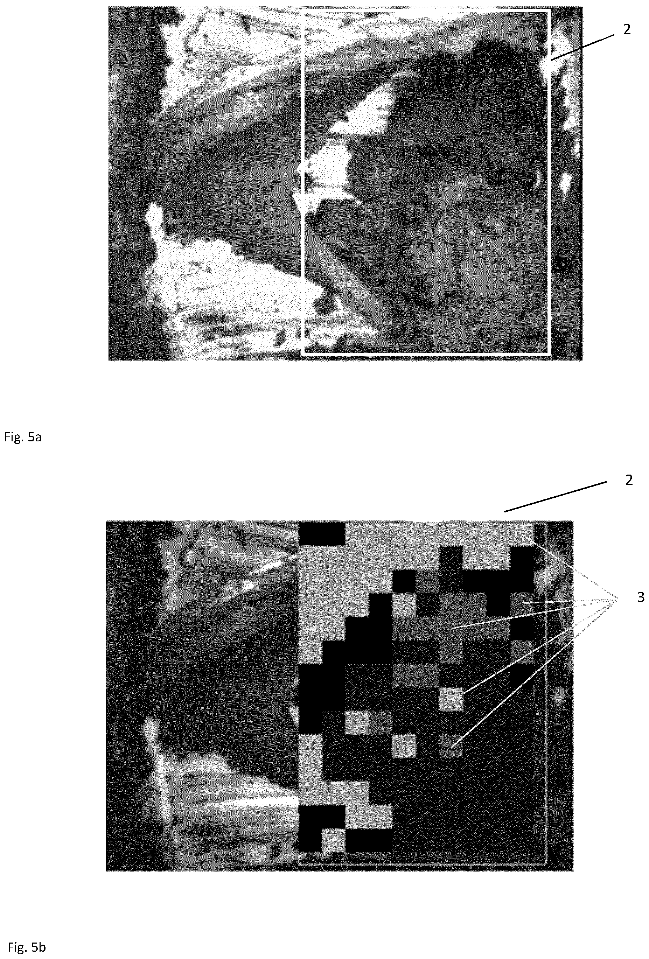

Fig. 5a zeigt ein Bild 2 bzw. Fig. 5b zeigt Bild 2 und Unterbilder 3 von entwässertem Schlamm. Der entwässerte Schlamm wird dabei durch eine Transportschnecke transportiert. In Fig. 5a deutet der weiße Rahmen das durch das Kamerasystem erfasste Bild 2 an. Fig. 5b zeigt das durch das Berechnungsmodell in Unterbilder 3 unterteilte Bild 2, wobei die Unterbilder 3 durch das trainierte Berechnungsmodell klassifiziert werden und die jeweils dem Unterbild zugeordnete Klasse durch die Färbung des Unterbilds 3 bzw. des Quadrats 3 angedeutet ist. Vorteilhafterweise umfasst die Klassifizierung eine Klasse zur Erfassung ungültiger Teilbilder 3, welche nicht in die Beurteilung der Entwässerung des Schlamms einfließen. Dabei werden Teilbilder als ungültig betrachtet, so auf den Teilbildern kein entwässerter Schlamm dargestellt ist, sondern Elemente der Entwässerungsvorrichtung erfasst sind. **In** Fig. 5a bzw. 5b ist beispielsweise im Bild 2 neben dem entwässerten Schlamm deutlich die Förderschnecke zu erkennen.

Die vorliegende Erfindung bietet zahlreiche Vorteile. Sie erlaubt eine effektive und objektive Regelung der Zugabe eines Flockungsmittels zu einem Schlamm, wobei eine optimale Entwässerung mit geringstem Flockungsmitteleinsatz erzielt wird, was ökologisch wie ökonomisch relevant ist. Das erfindungsgemäße Verfahren erlaubt ein schnelles und einfaches Training des Rechenmodells, wodurch das Verfahren auf die Entwässerung verschiedenster Schlämme anwendbar ist. Insbesondere die Unterteilung der Bilder in Unterbilder, wobei die Beurteilung der Unterbilder durch das computerimplementierte Rechenmodell erfolgt. Dies erlaubt zum einen mit vergleichbar wenigen Trainingsbildern das Rechenmodell zu trainieren. Zum anderen erfolgt die Auswertung der Teilbilder bei verbesserter Aussagekraft schneller und weniger rechenintensiv - verglichen mit einer Beurteilung auf Basis von Einzelbildern. So die Bilder in Bereichen erstellt werden, welche neben dem entwässerten Schlamm bzw. der entwässerten Flüssigkeit auch Grenzflächen umfassen, zeigt die Auswertung der entsprechenden Unterbilder eine weiter erhöhte Aussagekraft.

### Bezugszeichen

(1) Entwässerungsvorrichtung
(2) Bild
(3) Teilbild
(4) Grenzfläche
(5) Barriere
(6) Sieb

## Patentansprüche

1. Verfahren zur Regelung der Zugabe eines Flockungsmittels zu einem Schlamm, wobei dem Schlamm das Flockungsmittel zugegeben wird und der Schlamm anschließend in einer Entwässerungsvorrichtung (1), beispielsweise einer Entwässerungsschnecke, einem Dekanter, einer Siebentwässerung, etc., zumindest teilweise entwässert wird, wobei von dem entwässerten Schlamm und/oder von der aus dem Schlamm entwässerten Flüssigkeit Bilder (2) mit einem Kamerasystem erstellt werden, die Bilder (2) mit einem computerimplementierten Rechenmodell zur Bildanalyse ausgewertet werden, wobei das Rechenmodell zuvor mit einem Trainingsdatensatz trainiert wurde und der Trainingsdatensatz Trainingsbilder (2) von entwässertem Schlamm und/oder von der aus dem Schlamm entwässerten Flüssigkeit umfasst, **dadurch gekennzeichnet, dass** das computerimplementierte Rechenmodell zur Bildanalyse als künstliches neuronales Netzwerk ausgebildet ist, der Trainingsdatensatz weiter die aus den einzelnen Trainingsbildern (2) durch eine Unterteilung gebildeten Trainingsteilbilder (3) und die Klassifizierung der einzelnen Trainingsteilbilder (3) umfasst, wobei zur Unterteilung der Trainingsbilder (2) die Größe der Traininingsteilbilder (3) verringert wurde, wobei die Größe der Trainingsteilbilder (3) zumindest so groß gewählt wurde, dass die Traininingsteilbilder (3) Rückschlüsse auf die Oberflächentextur, insbesondere die Körnung, das Relief oder die Risse, des entwässerten Schlamms bzw. auf die Blasen oder Schaumbildung der entwässerten Flüssigkeit zulassen, wobei das Rechenmodell die einzelnen Bilder (2) in Teilbilder (3) unterteilt analog der Unterteilung der Trainingsbilder in Trainingsteilbilder, die Teilbilder (3) des einzelnen Bildes (2) klassifiziert, wobei das Rechenmodell die Teilbilder (3) von dem entwässerten Schlamm nach einer Oberflächentextur, insbesondere einer Körnung, einem Relief bzw. Rissen des entwässerten Schlamms klassifiziert und wobei auf Basis der Klassifizierung der Teilbilder (3) die Entwässerung des Schlamms beurteilt wird und auf Basis der Beurteilung der Entwässerung des Schlamms die Regelung der Zugabe des Flockungsmittels erfolgt.

2. Verfahren nach Anspruch 1, wobei das Rechenmodell die Teilbilder (3) von der aus dem Schlamm entwässerten Flüssigkeit nach in der Flüssigkeit eingeschlossene Blasen bzw. einem auf der Flüssigkeit ausgebildeten Schaum klassifiziert.

3. Verfahren nach Anspruch 1 bis 2, wobei das Rechenmodell die Teilbilder (3) nach Farbeigenschaften, insbesondere einem Farbwert, einer Farbsättigung bzw. einem Hellwert klassifiziert.

4. Verfahren nach einem der Ansprüche 1 bis 3, wobei die Klassifizierung der Teilbilder (3) zumindest zwei Klassen umfasst, wobei eine erste Klasse eine zu geringe Entwässerung bzw. Flockungsmittelzugabe und eine zweite Klasse eine zu große Entwässerung bzw. Flockungsmittelzugabe darstellt.

5. Verfahren nach Anspruch 4, wobei die Klassifizierung der Teilbilder (3) zumindest eine weitere dritte Klasse umfasst, wobei die dritte Klasse eine zufriedenstellende Entwässerung bzw. Flockungsmittelzugabe darstellt.

6. Verfahren nach Anspruch 4 oder 5, wobei eine Verteilung der Häufigkeit der Klassen der Teilbilder (3) des Bildes (2) zur Beurteilung der Entwässerung des Schlamms herangezogen wird.

7. Verfahren nach Anspruch 4 bis 6, wobei eine weitere Klasse ungültige Teilbilder (3) erfasst.

8. Verfahren nach Anspruch 1 bis 7, wobei zur Erstellung des Trainingsdatensatzes eine gewünschte Entwässerung bzw. Flockungsmittelzugabe eingestellt wird und die Trainingsbilder (2) von dem so entwässerten Schlamm und/oder von der entwässerten Flüssigkeit als eine zufriedenstellende Entwässerung bzw. Flockungsmittelzugabe darstellend klassifiziert werden.

9. Verfahren nach Anspruch 1 bis 8, wobei zur Erstellung des Trainingsdatensatzes eine zu geringe bzw. zu große Entwässerung bzw. Flockungsmittelzugabe eingestellt wird und die Trainingsbilder (2) von dem so entwässerten Schlamm und/oder von der entwässerten Flüssigkeit als eine zu geringe bzw. eine zu große Entwässerung bzw. Flockungsmittelzugabe darstellend klassifiziert werden.

10. Verfahren nach einem der Ansprüche 1 bis 9, wobei die Bilder (2) von dem entwässerten Schlamm und/oder von der entwässerten Flüssigkeit in einem Bereich erstellt werden, welcher Bereich eine Grenzfläche (4) umfasst, insbesondere eine freie Siebfläche eines Siebes auf dem der Schlamm geführt ist, beispielsweise in einem Randbereich des Siebes oder im Nachlauf nach einer auf einen Sieb (6) wirkenden Barriere (5), eine freie Fläche einer Entwässerungs- bzw. Förderschnecke bzw. eine Wandung, die in direktem Kontakt mit dem Schlamm bzw. der entwässerten Flüssigkeit steht.

11. Entwässerungsvorrichtung (1) für Schlamm, beispielsweise eine Entwässerungsschnecke, ein Dekanter, eine Siebentwässerung, etc., zur Durchführung des Verfahrens nach einem der Ansprüche 1 bis 10, umfassend ein Kamerasystem zur Erstellung von Bildern von dem entwässerten Schlamm und/oder von der aus dem Schlamm entwässerten Flüssigkeit, Mittel zur Regelung der Zugabe eines Flockungsmittels zu dem Schlamm und einen Computer, eingerichtet zur Ausführung des Rechenmodells zur Bildanalyse entsprechend dem Verfahren nach einem der Ansprüche 1 bis 10.

12. Vorrichtung nach Anspruch 11, wobei das Kamerasystem eine Digitalkamera und Leuchtmittel umfasst, der Digitalkamera eine optische Achse zugeordnet ist und die Leuchtmittel zur Ausleuchtung in Richtung der optischen Achse ausgestaltet sind.

13. Computerprogrammprodukt, umfassend Befehle, die bewirken, dass die Vorrichtung des Anspruchs 11 oder 12 die Verfahrensschritte nach einem der Ansprüche 1 bis 10 ausführt.

## Claims

1. Method for controlling the addition of a flocculant to a sludge, wherein the flocculant is added to the sludge and the sludge is subsequently at least partially dewatered in a dewatering device (1), for example a dewatering screw, a decanter, a wire dewatering device, etc., wherein images (2) of the dewatered sludge and/or of the liquid dewatered from the sludge are produced with a camera system, the images (2) are evaluated with a computer-implemented calculation model for image analysis, wherein the computer model has been previously trained with a training data set and the training data set comprises training images (2) of dewatered sludge and/or of the liquid dewatered from the sludge, **characterised in that** that the computer-implemented computational model for image analysis is formed as artificial neural network the training data set further comprises the training sub-images (3) formed from the individual training images (2) by a subdivision and the classification of the individual training sub-images (3), wherein for subdividing the training images (2) the size of the training sub-images (3) was reduced, the size of the training sub-images (3) being selected at least so large that the training sub-images (3) allow conclusions to be drawn about the surface texture, in particular the granulation, the relief, or the cracks, of the dewatered sludge or about the bubbles or foam formation of the dewatered liquid, the computational model dividing the individual images (2) into sub-images (3) analogously to the subdivision of the training images into training sub-images, classifying the sub-images (3) of the individual image (2), wherein the computational model classifies the sub-images (3) of the dewatered sludge according to a surface texture, in particular a granulation, a relief, or cracks, of the dewatered sludge and wherein the dewatering of the sludge is assessed on the basis of the classification of the sub-images (3) and the control of the flocculant dosage is effected on the basis of the assessment of the dewatering of the sludge.

2. Method according to claim 1, wherein the computational model classifies the sub-images (3) of the liquid dewatered from the sludge according to bubbles trapped in the liquid or a foam formed on the liquid.

3. Method according to claim 1 to 2, wherein the calculation model classifies the sub-images (3) according to colour properties, in particular a colour value, a colour saturation or a brightness value.

4. Method according to one of claims 1 to 3, wherein the classification of the sub-images (3) comprises at least two classes, a first class representing too little dewatering or flocculant dosage and a second class representing too much dewatering or flocculant dosage.

5. Method according to claim 4, wherein the classification of the sub-images (3) comprises at least a further third class, the third class being satisfactory dewatering or flocculant dosage.

6. Method according to claim 4 or 5, wherein a distribution of the frequency of the classes of the sub-images (3) of the image (2) is used to assess the dewatering of the sludge.

7. Method according to claim 4 to 6, wherein a further class detects invalid sub-images (3).

8. Method according to claim 1 to 7, wherein a desired dewatering or flocculant dosage is set to create the training data set and the training images (2) of the dewatered sludge and/or dewatered liquid are classified as representing satisfactory dewatering or flocculant dosage.

9. Method according to claim 1 to 8, wherein too little or too much dewatering or flocculant dosage is set to create the training data set and the training images (2) of the thus dewatered sludge and/or of the dewatered liquid are classified as representing too little or too much dewatering or flocculant dosage.

10. Method according to one of claims 1 to 9, wherein the images (2) of the dewatered sludge and/or of the dewatered liquid are made in an area comprising a boundary surface (4), in particular a free wire surface of a wire on which the sludge is guided, for example in an edge region of the wire or in the wake after a barrier (5) acting on a wire (6), a free surface of a dewatering or conveying screw or a wall which is in direct contact with the sludge or the dewatered liquid.

11. Dewatering device (1) for sludge, for example a dewatering screw, a decanter, a wire dewatering device, etc., for carrying out the method according to one of claims 1 to 10, comprising a camera system for producing images of the dewatered sludge and/or of the liquid dewatered from the sludge, means for controlling the addition of a flocculant to the sludge and a computer arranged to execute the computational model for image analysis according to the method of one of claims 1 to 10.

12. Device according to claim 11, wherein the camera system comprises a digital camera and illuminating means, the digital camera is associated with an optical axis and the illuminating means are configured for illumination in the direction of the optical axis.

13. A computer program product comprising instructions for causing the device of claim 11 or 12 to perform the method steps according to one of claims 1 to 10.

## Revendications

1. Procédé de régulation de l'ajout d'un floculant à des boues, dans lequel le floculant est ajouté aux boues et les boues sont ensuite, au moins en partie, déshydratées dans un dispositif de déshydratation (1), par exemple une vis de déshydratation, un décanteur, un crible de déshydratation, etc., dans lequel des images (2) des boues déshydratées et/ou du liquide déshydraté provenant des boues sont produites à l'aide d'un système de caméra, les images (2) sont évaluées à l'aide d'un modèle informatique mis en œuvre par ordinateur pour l'analyse d'images, dans lequel le modèle informatique a été entraîné au préalable à l'aide d'un ensemble de données d'entraînement et l'ensemble de données d'entraînement comprend des images d'entraînement (2) des boues déshydratées et/ou du liquide déshydraté provenant des boues, **caractérisé en ce que** le modèle informatique mise en œuvre par ordinateur pour l'analyse d'image est conçu sous la forme d'un réseau de neurones artificiels, l'ensemble de données d'entraînement comprend en outre les sous-images d'entraînement (3) constituées à partir des images d'entraînement individuelles (2) par subdivision et par classement des sous-images d'entraînement individuelles (3), dans lequel pour la subdivision des images d'entraînement (2), la taille des sous-images d'entraînement (3) a été réduite, la taille des sous-images d'entraînement (3) ayant été choisie au moins suffisamment grande pour que les sous-images d'entraînement (3) permettent de tirer des conclusions sur la texture de surface, en particulier une granularité, un relief ou des fissures, des boues déshydratées ou sur les bulles ou la formation de mousse du liquide déshydraté, dans lequel le modèle informatique divise chacune des images (2) en sous-images (3) de manière analogue à la subdivision des images d'entraînement en sous-images d'entraînement, classe les sous-images (3) de l'image individuelle (2), dans lequel le modèle informatique classe les sous-images (3) des boues déshydratées en fonction de la texture de surface, en particulier, d'une granularité, d'un relief ou de fissures, des boues déshydratées et dans lequel la déshydratation des boues est analysée sur la base du classement des sous-images (3) et la régulation de l'ajout du floculant s'effectue sur la base de l'analyse des boues déshydratées.

2. Procédé selon la revendication 1, dans lequel le modèle informatique classe les sous-images (3) du liquide déshydraté provenant des boues en fonction des bulles emprisonnées dans le liquide ou dans une mousse qui s'est formée sur le liquide.

3. Procédé selon la revendication 1 à 2, dans lequel le modèle informatique classe les sous-images (3) en fonction des propriétés de couleur, en particulier d'une valeur de couleur, d'une saturation et d'une valeur de luminosité.

4. Procédé selon l'une quelconque des revendications 1 à 3, dans lequel le classement des sous-images (3) comprend au moins deux classes, une première classe représentant une déshydratation ou un dosage de floculant trop faible et une seconde classe représentant une déshydratation ou un dosage de floculant trop important(e).

5. Procédé selon la revendication 4, dans lequel la classification des sous-images (3) comprend au moins une troisième classe supplémentaire, la troisième classe supplémentaire étant une déshydratation ou un dosage de floculation satisfaisant(e).

6. Procédé selon la revendication 4 ou 5, dans lequel la distribution de la fréquence d'apparition des classes des sous-images (3) de l'image (2) est utilisée pour analyser la déshydratation des boues.

7. Procédé selon la revendication 4 à 6, dans lequel une autre classe détecte les sous-images (3) non valides.

8. Procédé selon la revendication 1 à 7, dans lequel une déshydratation ou un dosage de floculant souhaité(e) est défini(e) afin de créer l'ensemble de données d'entraînement et les images d'entraînement (2) des boues déshydratées et/ou du liquide déshydraté sont classées comme représentant une déshydratation ou un dosage de floculant satisfaisant(e).

9. Procédé selon la revendication 1 à 8, dans lequel une déshydratation ou un dosage de floculant trop faible ou trop élevé(e) est défini(e) pour créer l'ensemble de données d'entraînement et les images d'entraînement (2) des boues ainsi déshydratées et/ou du liquide déshydraté sont classées comme représentant une déshydratation ou un dosage de floculant trop faible ou trop élevé(e).

10. Procédé selon l'une quelconque des revendications 1 à 9, dans lequel les images (2) des boues déshydratées et/ou du liquide déshydraté sont produites dans une zone comprenant une surface de séparation (4), en particulier dans une surface de tamis libre d'un tamis sur lequel les boues sont guidées, par exemple dans une zone marginale du tamis ou en aval d'une barrière (5) agissant sur un crible (6), une surface libre d'une vis de convoyage ou de déshydratation ou une paroi qui est en contact direct avec les boues ou le liquide déshydraté.

11. Dispositif de déshydratation (1) pour les boues, par exemple une vis de déshydratation, un décanteur, un crible de déshydratation, etc., destiné à mettre en œuvre le procédé selon l'une quelconque des revendications 1 à 10, comprenant un système de caméra destiné à produire des images des boues déshydratées et/ou du liquide déshydraté provenant des boues, un moyen de régulation de l'ajout d'un floculant aux boues et un ordinateur configuré pour exécuter le modèle informatique pour analyser les images selon le procédé selon l'une quelconque des revendications 1 à 10.

12. Dispositif selon la revendication 11, dans lequel le système de caméra comprend une caméra numérique et un dispositif d'éclairage, la caméra numérique étant associée à un axe optique et le dispositif d'éclairage étant conçu pour éclairer dans la direction de l'axe optique.

13. Produit programme informatique comprenant des instructions qui amènent le dispositif de la revendication 11 ou 12 à exécuter les étapes du procédé selon l'une quelconque des revendications 1 à 10.
